# EUROPEAN PATENT SPECIFICATION

(11) **EP 3 868 213 B1**
(45) Date of publication and mention of the grant of the patent: **17.12.2025**
(21) Application number: 19872462.7
(22) Date of filing: 11.10.2019
(51) Int. Cl.: A23J 3/16, A23L 5/00, A23L 13/00, A23L 17/00

(54) **PRODUCTION METHOD FOR DAINTY-FOOD-LIKE FOOD PRODUCT**
VERFAHREN ZUR HERSTELLUNG EINES LEBENSMITTELPRODUKTS, DAS EINEM LECKEREN LEBENSMITTEL ÄHNLICH IST
PROCÉDÉ DE PRODUCTION D'UN PRODUIT ALIMENTAIRE DE TYPE ÉPICERIE FINE

(30) Priority: 19.10.2018 JP 2018197176
(43) Date of publication of application: 25.08.2021
(73) Proprietor: Fuji Oil Co., Ltd., Izumisano-shi, Osaka 598-8540 (JP)
(72) Inventor: SATO, Tomonori, Tsukubamirai-shi, Ibaraki 300-2436 (JP); YONEMOTO, Hiroko, Tsukubamirai-shi, Ibaraki 300-2436 (JP)
(74) Representative: Boult Wade Tennant LLP
(86) International application number: PCT/JP2019/040212
(87) International publication number: WO 2020/080287

(56) References cited:
- WO-A1-2010/077356
- WO-A1-2010/126563
- WO-A1-2014/156948
- JP-A- 2001 346 520
- JP-A- 2006 191 927
- JP-A- 2018 075 028
- JP-A- H04 228 037
- JP-A- H04 287 646
- JP-A- H06 292 513
- JP-A- S6 274 246
- KIKUCHI, SABURO: " History of textured soybean protein foods", SCIENCE OF COOKERY, vol. 20, no. 4, 1987, pages 42 - 52, XP009527388, ISSN: 2186-5795

## Description

### Technical Field

The present invention relates to a method for producing a delicacy food analog containing a soy protein as a major component.

### Background Art

Some dried marine products have unique taste, flavor and texture, and dried delicacy foods are produced by seasoning the dried marine products. Examples of these products include a dried seasoned squid, a dried scallop product, and a product produced by pretreating, seasoning and drying fish. In addition, there are dried delicacy foods produced from livestock meat such as beef or poultry meat such as chicken by slicing, drying and seasoning the meat.

An attempt of producing delicacy food analog from plant raw material has been made. For example, techniques relating to a method of producing a delicacy food analog based on a soy protein, such as shredded and dried squid analog having a good taste and texture and a dried meat analog, are disclosed (Patent Documents 1 and 2).

### Prior Art Documents

### Patent Documents

Patent Document 1: JP S62-55058 A
Patent Document 2: JP S62-74246 A
Patent Document 3: JP 2007-202571 A JP H06 292 513 discloses a method of manufacturing sheet-like food products that contain fibrous soy protein.

### Summary of Invention

### Problems to Be Solved by Invention

The techniques of Patent Documents 1 and 2 have room for improvement because the texture is not sufficient as a delicacy food of meat and marine product such as fish. In addition, the techniques of Patent Documents 1 and 2 have a step of adding a large amount of water, 8 times or more with respect to a textured soy protein, to make the protein fibrous, and then separating the water by centrifugation, and then drying. Thus, it is not an efficient production method.

An object of the present invention is to provide a method for efficiently producing a delicacy food analog having a good texture with using a soy protein.

### Means for Solving Problems

The present inventors have intensively studied to solve the above problems. It is necessary to reduce a thickness of food in order to obtain a delicacy food analog having a good texture. Thus, the present inventors have studied an efficient production method of reducing the thickness. For example, a technique of pressing bread to make it thin to prepare snacks is disclosed as a means of applying pressure to food (Patent Document 3). Thus, the present inventors have studied a means of applying pressure to food with assuming that a delicacy food analog may be efficiently produced by reducing a thickness of food.

However, a good result has not been obtained when a large amount of water, which is 8 times or more, is added to a textured soy protein as shown in Patent Documents 1 and 2 because the water and the textured soy protein are separated when they are crushed. The present inventors have further intensively studied. As a result, they have found that a delicacy food analog having a good texture may be obtained by allowing the textured soy protein to absorb water in a specific range of 100 to 300 parts by weight with respect to the textured soy protein of 100 parts by weight, and then pressing it by applying pressure while heating at 100°C or higher to reduce the thickness thereof. The present invention has been completed by these findings.

The present invention is defined by the appended claims. That is, the present invention is:
(1) a method for producing a delicacy food analog including steps of:
   (A) preparing a water-absorbed textured soy protein by allowing the textured soy protein to absorb water of 100 to 300 parts by weight with respect to the textured soy protein of 100 parts by weight; and
   (B) placing the water-absorbed textured soy protein on a lower press plate of a press machine having an upper press plate having approximately planar surface and the lower press plate having approximately planar surface, and pressing the textured soy protein with the upper and lower press plates while heating at 100°C or higher to reduce a thickness of the water-absorbed textured soy protein to less than 3 mm;
(2) the method for producing a delicacy food analog of (1), where the water of 100 to 250 parts by weight with respect to the textured soy protein of 100 parts by weight is absorbed in the textured soy protein;
(3) the method for producing a delicacy food analog of (1), further including adding a seasoning;
(4) the method for producing a delicacy food analog of (2), further including adding a seasoning;
(5) the method for producing a delicacy food analog of (1), further including adding 5 to 30 parts by weight fat and/or 5 to 40 parts by weight glycerin;
(6) the method for producing a delicacy food analog of (2), further including adding 5 to 30 parts by weight fat and/or 5 to 40 parts by weight glycerin;
(7) the method for producing a delicacy food analog of (3), further including adding 5 to 30 parts by weight fat and/or 5 to 40 parts by weight glycerin;
(8) the method for producing a delicacy food analog of (4), further including adding 5 to 30 parts by weight fat and/or 5 to 40 parts by weight glycerin;
(9) a method for producing a delicacy food analog according to claim 1 wherein the textured soy protein excludes a fibrous soy protein;
(10) the method for producing a delicacy food analog of (9), where the water of 100 to 250 parts by weight with respect to the textured soy protein - excluding a fibrous soy protein-of 100 parts by weight is absorbed in the textured soy protein;
(11) the method for producing a delicacy food analog of (9), further including adding a seasoning;
(12) the method for producing a delicacy food analog of (10), further including adding a seasoning;
(13) the method for producing a delicacy food analog of (9), further including adding 5 to 30 parts by weight fat and/or 5 to 40 parts by weight glycerin;
(14) the method for producing a delicacy food analog of (10), further including adding 5 to 30 parts by weight fat and/or 5 to 40 parts by weight glycerin;
(15) the method for producing a delicacy food analog of (11), further including adding 5 to 30 parts by weight fat and/or 5 to 40 parts by weight glycerin.

### Effect of Invention

The present invention enables to produce a delicacy food analog, such as meat delicacy food analog and seafood delicacy food analog, having a good texture including a soy protein as a major component.

### Mode for Carrying Out Invention

### (Delicacy food analog)

A method for producing a delicacy food analog of the present invention includes the following steps (A) and (B), that is, the steps of:
(A) preparing a water-absorbed textured soy protein by allowing the textured soy protein to absorb water of 100 to 300 parts by weight with respect to the textured soy protein of 100 parts by weight; and
(B) placing the water-absorbed textured soy protein on a lower press plate of a press machine having an upper press plate having approximately planar surface and the lower press plate having approximately planar surface, and pressing the textured soy protein with the upper and lower press plates while heating at 100°C or higher to reduce a thickness of the water-absorbed textured soy protein to less than 3 mm.

The delicacy food analog of the present invention refers to a food having a thickness of less than 3 mm and a meat-like or seafood-like texture, and including a textured soy protein as a main raw material.

A meat-like delicacy food analog of the present invention has something chewy texture and meat-like fibrous feeling, and examples thereof include a substitute for beef jerky, pork jerky, chicken jerky, or lamb jerky.

A seafood-like delicacy food analog of the present invention has seafood-like fibrous feeling, and examples thereof include a substitute for dried horse mackerel seasoned with sweet cooking rice wine, dried sardine seasoned with sweet cooking rice wine, dried cutlass fish seasoned with sweet cooking rice wine, seasoned dried sandfish, seasoned dried sishamo (*Spinrinchus lanceolatus*), dried seasoned filefish, dried seasoned ray, or dried seasoned puffer fish.

A thickness of the delicacy food analog is preferably 2.5 mm or less, more preferably 2.0 mm or less. When the thickness is 3 mm or more, the texture may deteriorate. The thickness of the delicacy food analog of the present invention is measured with using a caliper.

An amount of water with respect to a textured soy protein of 100 parts by weight is preferably 100 to 250 parts by weight, and more preferably 150 to 250 parts by weight. When the amount of water with respect to the textured soy protein is too large, appropriate pressing may not be carried out because some water leaks out beyond the water absorption of the textured soy protein. When the amount of water is too small, the textured soy protein may not be sufficiently rehydrated, and when pressed with a press machine, the textured soy protein may partially collapse and may not be spread properly.

### (Textured soy protein)

A textured soy protein of the present invention (also referred to as granular soy protein) is mainly composed of a raw material derived from soybean, and is produced with an extruder such as twin-screw extruder by heating and pressurizing at 100 to 200°C and then excluding from the die at the tip of the extruder to expand. At that time, water may be added to the raw material as needed. In addition, an auxiliary material, such as starch, sugar and salt, may be added.

Specific examples of the raw material derived from soybean include defatted soybean, isolated soy protein, concentrated soy protein, defatted soymilk powder, and full-fat soymilk powder. Preferably, the raw material derived from soybean is an isolated soy protein.

An amount of the textured soy protein in the delicacy food analog of the present invention is approximately 50% by weight or more, preferably 60% by weight or more, more preferably 70% by weight or more, further preferably 80% by weight or more, in terms of dry matter. In addition, an upper limit of the amount may be 100% by weight, preferably 95% by weight or less, more preferably, 90% by weight or less.

Commercially available product may be used as a textured soy protein of the present invention. For example, "APEX" series, "FUJINIC" series, and "VEGEPLUS" series, manufactured by Fuji Oil Co., Ltd. may be used as the textured soy protein.

The raw material needs to absorb 100 to 300 parts by weight of water with respect to a textured soy protein of 100 parts by weight, but other materials, such as seasoning, fat, sugar, and alcohol, may be added as needed.

### (Seasoning)

Examples of a seasoning used in the present invention include amino acid; sugar such as sucrose, glucose, dextrin and reduced starch syrup; inorganic salt such as table salt and potassium chloride; nucleic acid such as monosodium glutamate, sodium inosinate and sodium guanylate; natural seasoning such as soy sauce, miso (soybean paste), vinegar, salt, pepper, red pepper, Worcester sauce, livestock meat extract, poultry extract, seafood extract, yeast extract and protein hydrolysate; spice such as spice and herb; excipient such as dextrin and various starches. These may be used alone or in combination of two or more.

Various seasonings may be added in an appropriate amount at a step of mixing raw materials, or added to a prepared delicacy food analog, according to a desired taste and flavor.

### (Fat)

Fat may be used as a raw material in the present invention. An adding amount of the fat is preferably 5 to 30 parts by weight, more preferably 10 to 25 parts by weight, based on a textured soy protein of 100 parts by weight. A juicy feeling may be added to a delicacy food analog by using fat as a raw material.

Examples of the fat include, vegetable fat such as rapeseed oil, soybean oil, corn oil, sunflower oil, palm oil, palm kernel oil and coconut oil; animal fat such as beef tallow, lard and milk fat; and fractionated fat, hydrogenated fat, interesterified fat and emulsified fat with an emulsifier, of the vegetable fat or the animal fat. These fats may be used alone or in combination of two or more.

### (Sugar)

Examples of sugar include monosaccharide such as glucose and fructose; oligosaccharide such as sucrose, maltose, fructooligosaccharide, raffinose, maltotriose, trehalose, stachyose and maltotetraose; sugar alcohol; polysaccharide such as dextrin, funoran, agar, carrageenan, furcellaran, tamarind seed polysaccharide, tara gum, karaya gum, pectin, xanthan gum, sodium alginate, water-soluble soybean polysaccharide, water-soluble pea polysaccharide, tragacanth gum, guar gum, ghatti gum, locust bean gum, pullulan, gellan gum, gum arabic, hyaluronic acid, cyclodextrin, chitosan, carboxymethyl cellulose (CMC), propylene glycol alginate, various starches such as modified starch; and hydrolysate of these polysaccharides.

### (Alcohol)

Examples of an alcohol include glycerin. An adding amount of alcohol is preferably 5 to 40 parts by weight, more preferably 10 to 25 parts by weight, with respect to the textured soy protein of 100 parts by weight. An appropriate wet feeling may be added to a delicacy food analog by adding glycerin.

### (Press machine)

A press machine used in the present invention is not particularly limited as long as it has an upper press plate having approximately planar surface and a lower press plate having approximately planar surface, and a sample placed on the lower press plate may be pressed with the upper and lower press plates while heating at 100°C or higher. Examples of such a press machine include, but are not limited to, "Press Roaster one set plate 200V" manufactured by Taiyo Seisakusho Co., Ltd.

Examples of the press machine include that (1) the lower press plate is fixed and the upper press plate may move up and down to crush the sample by applying pressure, and (2) both the upper and lower press plates may move and a sample may be crushed by applying pressure by moving the press plates up and down.

In the present invention, a machine having a certain space, e.g. width of 3 mm or more, between plates when the upper plate is closed without placing sample, such as a waffle maker, is not a press machine of the present invention because a crushing force is very low and a thickness of a delicacy food analog may be 3 mm or more when a sample is placed and pressed.

A heating temperature is 100°C or higher, preferably 100°C or higher and 250°C or lower. By crushing and heating with a press machine at the same time, a delicacy food analog may be efficiently crushed and water may be efficiently removed, and a favorable flavor by heating may be imparted.

### Examples

Hereinafter, the present invention will be described by way of Examples. In Examples, part and % are weight basis unless otherwise specified.

### (Examples 1 to 3, Comparative Examples 1 to 5)

First, an effect of a device to thickness and texture of delicacy food analog by heating or pressing while heating with using various devices was studied.

According to the formulation shown in Table 2, a textured soy protein was allowed to absorb water, and the seasoning, fat, and glycerin were impregnated into the textured soy protein (hereinafter, the obtained mixture at this stage may be referred to as a "mixture of raw materials"). A step of heating or pressing while heating was carried out with using the various devices shown in Table 1 to produce a delicacy food analog. Table 2 shows the results of measuring a thickness of delicacy food analog using caliper, and Table 3 shows the results of evaluating texture.

**(Table 1)**

| | Device used for heating or pressing while heating a mixture of raw materials |
|---|---|
| Comparative Example 1 | Mixture of raw materials was directly heated at 150°C with a hot plate. |
| Comparative Example 2 | Mixture of raw materials was directly heated at 150°C with a hot plate. |
| Comparative Example 3 | Mixture of raw materials was flattened with palm and then heated at 150°C with a hot plate. |
| Comparative Example 4 | Mixture of raw materials was put into a squid press machine (sandwiched by hands), which was pre-heated at 150°C, and heated while crushing. |
| Comparative Example 5 | Mixture of raw materials was put into a waffle maker and baked with pressing. |
| Example 1 | Mixture of raw materials was pressed under pressure at 150°C with a press machine. The press machine has an upper press plate having approximately planar surface and a lower press plate having approximately planar surface, and a sample placed on the lower press plate may be pressed by the upper and lower press plates while heating at 100°C or higher. |
| Example 2 | |
| Example 3 | |

| | |
|---|---|
| * The hot plate in Comparative Examples 1 to 3: CRC-A300 manufactured by Tiger Corporation. * The squid press machine in Comparative Example 4: "Osaka Squid press machine" manufactured by Ikenaga Iron Works Co., Ltd. * The waffle maker in Comparative Example 5: Chef's Choice Waffle Cone Express 838. * The press machine in Examples 1 to 3: "Press Roaster one set plate 200V" manufactured by Taiyo Seisakusho Co., Ltd. | |

**(Table 2)**

| (Unit: part) | | | | | | | | | |
|---|---|---|---|---|---|---|---|---|---|
| | Manufacturer | Comparative Example 1 | Comparative Example 2 | Comparative Example 3 | Comparative Example 4 | Comparative Example 5 | Example 1 | Example 2 | Example 3 |
| Textured soy protein (APEX-100) | Fuji Oil | 100 | - | 100 | 100 | 100 | 100 | 100 | - |
| Textured soy protein (FUJINIC PT-FLH) | Fuji Oil | - | 100 | - | - | - | - | - | 100 |
| Textured soy protein (VEGEPLUS 2900) | Fuji Oil | - | - | - | - | - | - | - | - |
| Textured soy protein (APEX-110) | Fuji Oil | - | - | - | - | - | - | - | - |
| Rapeseed oil | Fuji Oil | 20 | 20 | 20 | 20 | 20 | 20 | 20 | 20 |
| Glycerin | KAO | 20 | 20 | 20 | 20 | 20 | 20 | 20 | 20 |
| Beef seasoning (RF B/K) | Givaudan | 20 | 20 | 20 | 20 | 20 | 20 | - | 20 |
| Scallop extract | Ikeda Tohka | - | - | - | - | - | - | 100 | - |
| Water | | 180 | 180 | 180 | 180 | 180 | 180 | 100 | 180 |
| Thickness of the delicacy food-like food (mm) | | 19.72 | 4.89 | 5.88 | 4.56 | 4.19 | 1.69 | 1.82 | 1.47 |

**(Table 3)**

| | Evaluation of texture |
|---|---|
| Comparative Example 1 | It had a thick shape and a bad texture. |
| Comparative Example 2 | It had a thick shape and a bad texture. |
| Comparative Example 3 | It had a thick shape and a bad texture. |
| Comparative Example 4 | It had a thick shape and a bad texture. |
| Comparative Example 5 | It had a thick shape and a bad texture. |
| Example 1 | It had a thin shape, an appropriate baked surface, and an appearance and a texture like a meat. In addition, the texture was moderately juicy and wet. |
| Example 2 | It had a thin shape, an appropriate baked surface, and an appearance and a texture like a delicacy food, Kawahagi-roll (a dried, seasoned and flattened filefish). In addition, the texture was moderately juicy and wet. |
| Example 3 | It had a thin shape, an appropriate baked surface, and an appearance and a texture like a meat. In addition, the texture was moderately juicy and wet. |

As a result of Tables 2 and 3, it was confirmed that a delicacy food analog having a good texture with less than 3 mm thickness was produced by pressing a mixture of raw materials containing a textured soy protein with a press machine used in Examples 1 to 3 under pressure while heating.

However, as in Comparative Examples 1 to 3, a delicacy food analog prepared by heating with a hot plate, i.e. a sample was placed on the plate and simply heated, had a thick shape and a bad texture. In addition, a device used in Comparative Examples 4 and 5 applied little pressure to a mixture of raw materials when the mixture was put into the devise and pressed, and thereby the obtained delicacy food analog had a thick shape and a bad texture.

### (Examples 4 to 9, Comparative Examples 6 to 8)

A relationship between a water absorption ratio to a textured soy protein and a thickness of delicacy food analog was studied.

After allowing a textured soy protein to absorb water, raw materials were mixed according to the formulation shown in Table 4, the mixture was pressed with a press machine, "Press Roaster one set plate 200V" manufactured by Taiyo Seisakusho Co., Ltd., at 150°C under pressure to prepare a delicacy food analog. A result of measuring a thickness of the delicacy food analog was shown in Table 4.

**(Table 4)**

| (Unit: part) | | | | | | | | | |
|---|---|---|---|---|---|---|---|---|---|
| | Comparative Example 6 | Example 4 | Example 5 | Example 6 | Comparative Example 7 | Comparative Example 8 | Example 7 | Example 8 | Example 9 |
| Textured soy protein (APEX-100) | 100 | 100 | 100 | 100 | 100 | - | - | - | - |
| Textured soy protein (FUJINIC PT-FLH) | - | - | - | - | - | 100 | 100 | 100 | 100 |
| water | - | 100 | 200 | 300 | 460 | - | 100 | 200 | 300 |
| Thickness (mm) | Not measurable | 2.49 | 1.89 | 1.54 | Not measurable | Not measurable | 1.92 | 1.67 | 1.43 |

As in Examples 4 to 9, when a textured soy protein absorbed 100 to 300 parts by weight water with respect to the textured soy protein of 100 parts by weight, a delicacy food analog having less than 3 mm thickness and a good texture was obtained. However, as in Comparative Example 6 and Comparative Example 8, when water was not added, a delicacy food analog was not obtained because the mixture was broken when pressed, and thus, the thickness could not be measured. Further, as in Comparative Example 7, when an amount of water absorbed in a textured soy protein is too large, a delicacy food analog was not obtained because water was leaked out from the mixture due to exceeding a capacity of absorbing water of the textured soy protein, and thus, the thickness could not be measured.

## Claims

1. A method for producing a delicacy food analog comprising steps of:
(A) preparing a water-absorbed textured soy protein by allowing the textured soy protein to absorb water of 100 to 300 parts by weight with respect to the textured soy protein of 100 parts by weight; and
(B) placing the water-absorbed textured soy protein on a lower press plate of a press machine having an upper press plate having approximately planar surface and the lower press plate having approximately planar surface, and pressing the textured soy protein with the upper and lower press plates while heating at 100°C or higher to reduce a thickness of the water-absorbed textured soy protein to less than 3 mm.

2. The method for producing a delicacy food analog according to claim 1, wherein the water of 100 to 250 parts by weight with respect to the textured soy protein of 100 parts by weight is absorbed in the textured soy protein.

3. The method for producing a delicacy food analog according to claim 1, further comprising adding a seasoning.

4. The method for producing a delicacy food analog according to claim 2, further comprising adding a seasoning.

5. The method for producing a delicacy food analog according to claim 1, further comprising adding 5 to 30 parts by weight fat and/or 5 to 40 parts by weight glycerin.

6. The method for producing a delicacy food analog according to claim 2, further comprising adding 5 to 30 parts by weight fat and/or 5 to 40 parts by weight glycerin.

7. The method for producing a delicacy food analog according to claim 3, further comprising adding 5 to 30 parts by weight fat and/or 5 to 40 parts by weight glycerin.

8. The method for producing a delicacy food analog according to claim 4, further comprising adding 5 to 30 parts by weight fat and/or 5 to 40 parts by weight glycerin.

9. A method for producing a delicacy food analog according to claim 1 wherein the textured soy protein excludes a fibrous soy protein.

10. The method for producing a delicacy food analog according to claim 9, wherein the water of 100 to 250 parts by weight with respect to the textured soy protein - excluding a fibrous soy protein-of 100 parts by weight is absorbed in the textured soy protein.

11. The method for producing a delicacy food analog according to claim 9, further comprising adding a seasoning.

12. The method for producing a delicacy food analog according to claim 10, further comprising adding a seasoning.

13. The method for producing a delicacy food analog according to claim 9, further comprising adding 5 to 30 parts by weight fat and/or 5 to 40 parts by weight glycerin.

14. The method for producing a delicacy food analog according to claim 10, further comprising adding 5 to 30 parts by weight fat and/or 5 to 40 parts by weight glycerin.

15. The method for producing a delicacy food analog according to claim 11, further comprising adding 5 to 30 parts by weight fat and/or 5 to 40 parts by weight glycerin.

## Patentansprüche

1. Verfahren zur Herstellung eines Delikatessen-Analogons, umfassend die Schritte:
(A) Herstellen eines texturierten Sojaproteins, das mit Wasser vollgesogen ist, indem man das texturierte Sojaprotein Wasser in einer Menge von 100 bis 300 Gewichtsteilen, bezogen auf 100 Gewichtsteile des texturierten Sojaproteins, aufsaugen lässt; und
(B) Platzieren des texturierten Sojaproteins, das mit Wasser vollgesogen ist, auf einer unteren Pressplatte einer Pressmaschine, die eine obere Pressplatte mit einer ungefähr planaren Oberfläche und die untere Pressplatte mit einer ungefähr planaren Oberfläche aufweist, und Pressen des texturierten Sojaproteins mit der oberen und der unteren Pressplatte, während es auf 100°C oder höher erhitzt wird, um die Dicke des texturierten Sojaproteins, das mit Wasser vollgesogen ist, auf weniger als 3 mm zu reduzieren.

2. Verfahren zur Herstellung eines Delikatessen-Analogons gemäß Anspruch 1, wobei das Wasser in einer Menge von 100 bis 250 Gewichtsteilen, bezogen auf 100 Gewichtsteile des texturierten Sojaproteins, von dem texturierten Sojaprotein aufgesogen wird.

3. Verfahren zur Herstellung eines Delikatessen-Analogons gemäß Anspruch 1, weiterhin umfassend das Hinzufügen einer Würze.

4. Verfahren zur Herstellung eines Delikatessen-Analogons gemäß Anspruch 2, weiterhin umfassend das Hinzufügen einer Würze.

5. Verfahren zur Herstellung eines Delikatessen-Analogons gemäß Anspruch 1, weiterhin umfassend das Hinzufügen von 5 bis 30 Gewichtsteilen Fett und/oder 5 bis 40 Gewichtsteilen Glycerin.

6. Verfahren zur Herstellung eines Delikatessen-Analogons gemäß Anspruch 2, weiterhin umfassend das Hinzufügen von 5 bis 30 Gewichtsteilen Fett und/oder 5 bis 40 Gewichtsteilen Glycerin.

7. Verfahren zur Herstellung eines Delikatessen-Analogons gemäß Anspruch 3, weiterhin umfassend das Hinzufügen von 5 bis 30 Gewichtsteilen Fett und/oder 5 bis 40 Gewichtsteilen Glycerin.

8. Verfahren zur Herstellung eines Delikatessen-Analogons gemäß Anspruch 4, weiterhin umfassend das Hinzufügen von 5 bis 30 Gewichtsteilen Fett und/oder 5 bis 40 Gewichtsteilen Glycerin.

9. Verfahren zur Herstellung eines Delikatessen-Analogons gemäß Anspruch 1, wobei das texturierte Sojaprotein kein faseriges Sojaprotein ist.

10. Verfahren zur Herstellung eines Delikatessen-Analogons gemäß Anspruch 9, wobei das Wasser in einer Menge von 100 bis 250 Gewichtsteilen, bezogen auf 100 Gewichtsteile des texturierten Sojaproteins, das kein faseriges Sojaprotein ist, von dem texturierten Sojaprotein aufgesogen wird.

11. Verfahren zur Herstellung eines Delikatessen-Analogons gemäß Anspruch 9, weiterhin umfassend das Hinzufügen einer Würze.

12. Verfahren zur Herstellung eines Delikatessen-Analogons gemäß Anspruch 10, weiterhin umfassend das Hinzufügen einer Würze.

13. Verfahren zur Herstellung eines Delikatessen-Analogons gemäß Anspruch 9, weiterhin umfassend das Hinzufügen von 5 bis 30 Gewichtsteilen Fett und/oder 5 bis 40 Gewichtsteilen Glycerin.

14. Verfahren zur Herstellung eines Delikatessen-Analogons gemäß Anspruch 10, weiterhin umfassend das Hinzufügen von 5 bis 30 Gewichtsteilen Fett und/oder 5 bis 40 Gewichtsteilen Glycerin.

15. Verfahren zur Herstellung eines Delikatessen-Analogons gemäß Anspruch 11, weiterhin umfassend das Hinzufügen von 5 bis 30 Gewichtsteilen Fett und/oder 5 bis 40 Gewichtsteilen Glycerin.

## Revendications

1. Procédé pour produire un aliment analogue à un mets délicat, comprenant les étapes de :
(A) préparation d'une protéine de soja texturée ayant absorbé de l'eau par l'opération dans laquelle la protéine de soja texturée est laissée à absorber de l'eau à raison de 100 à 300 parties en poids pour 100 parties en poids de la protéine de soja texturée ; et
(B) placement de la protéine de soja texturée ayant absorbé de l'eau sur une plaque de pressage inférieure d'une machine de pressage ayant une plaque de pressage supérieure ayant une surface approximativement plane, la plaque de pressage inférieure ayant une surface approximativement plane, et pressage de la protéine de soja texturée avec les plaques de pressage supérieure et inférieure avec chauffage à 100°C ou plus pour réduire à moins de 3 mm l'épaisseur de la protéine de soja texturée ayant absorbé de l'eau.

2. Procédé pour produire un aliment analogue à un mets délicat selon la revendication 1, dans lequel 100 à 250 parties en poids d'eau, pour 100 parties en poids de la protéine de soja texturée, sont absorbées par la protéine de soja texturée.

3. Procédé pour produire un aliment analogue à un mets délicat selon la revendication 1, comprenant en outre l'addition d'un assaisonnement.

4. Procédé pour produire un aliment analogue à un mets délicat selon la revendication 2, comprenant en outre l'addition d'un assaisonnement.

5. Procédé pour produire un aliment analogue à un mets délicat selon la revendication 1, comprenant en outre l'addition de 5 à 30 parties en poids de matière grasse et/ou de 5 à 40 parties en poids de glycérine.

6. Procédé pour produire un aliment analogue à un mets délicat selon la revendication 2, comprenant en outre l'addition de 5 à 30 parties en poids de matière grasse et/ou de 5 à 40 parties en poids de glycérine.

7. Procédé pour produire un aliment analogue à un mets délicat selon la revendication 3, comprenant en outre l'addition de 5 à 30 parties en poids de matière grasse et/ou de 5 à 40 parties en poids de glycérine.

8. Procédé pour produire un aliment analogue à un mets délicat selon la revendication 4, comprenant en outre l'addition de 5 à 30 parties en poids de matière grasse et/ou de 5 à 40 parties en poids de glycérine.

9. Procédé pour produire un aliment analogue à un mets délicat selon la revendication 1, dans lequel la protéine de soja texturée ne contient pas de protéine de soja fibreuse.

10. Procédé pour produire un aliment analogue à un mets délicat selon la revendication 9, dans lequel 100 à 250 parties en poids d'eau, pour 100 parties en poids de la protéine de soja texturée ne contenant pas de protéine de soja fibreuse, sont absorbées par la protéine de soja texturée.

11. Procédé pour produire un aliment analogue à un mets délicat selon la revendication 9, comprenant en outre l'addition d'un assaisonnement.

12. Procédé pour produire un aliment analogue à un mets délicat selon la revendication 10, comprenant en outre l'addition d'un assaisonnement.

13. Procédé pour produire un aliment analogue à un mets délicat selon la revendication 9, comprenant en outre l'addition de 5 à 30 parties en poids de matière grasse et/ou de 5 à 40 parties en poids de glycérine.

14. Procédé pour produire un aliment analogue à un mets délicat selon la revendication 10, comprenant en outre l'addition de 5 à 30 parties en poids de matière grasse et/ou de 5 à 40 parties en poids de glycérine.

15. Procédé pour produire un aliment analogue à un mets délicat selon la revendication 11, comprenant en outre l'addition de 5 à 30 parties en poids de matière grasse et/ou de 5 à 40 parties en poids de glycérine.
